# EUROPÄISCHE PATENTSCHRIFT

(11) **EP 2 571 804 B1**
(45) Veröffentlichungstag und Bekanntmachung des Hinweises auf die Patenterteilung: **27.07.2016**
(21) Anmeldenummer: 11721237.3
(22) Anmeldetag: 20.05.2011
(51) Int. Cl.: C01B 3/04, B01J 19/08

(54) **EINRICHTUNG UND VERFAHREN ZUR GEWINNUNG VON WASSERSTOFF**
INSTALLATION AND METHOD FOR OBTAINING HYDROGEN
DISPOSITIF ET PROCÉDÉ D'EXTRACTION D'HYDROGÈNE

(30) Priorität: 21.05.2010 DE 102010021124
(43) Veröffentlichungstag der Anmeldung: 27.03.2013
(73) Patentinhaber: Hochschule Darmstadt, 64295 Darmstadt (DE)
(72) Erfinder: BETZ, Thomas, 63505 Langenselbold (DE); BETZ, Timo, 64291 Darmstadt (DE)
(74) Vertreter: Lucke, Andreas
(86) Internationale Anmeldenummer: PCT/EP2011/002537
(87) Internationale Veröffentlichungsnummer: WO 2011/144357

(56) Entgegenhaltungen:
- US-A1- 2007 284 244
- US-A1- 2009 035 619
- US-A1- 2010 003 556

## Beschreibung

### TECHNISCHES GEBIET

Die vorliegende Erfindung liegt auf dem Gebiet der Wasserstoffgewinnung aus einem Wasserstoffhaltigen Medium wie beispielsweise Wasser.

### STAND DER TECHNIK

Wasserstoff gilt als einer der wichtigsten Energieträger der Zukunft. Als Brennstoff enthält Wasserstoffgas mehr Energie pro Gewichtseinheit als jeder andere chemische Brennstoff und vermeidet bei seiner Verbrennung die Erzeugung von Treibhausgasen. Ferner kann die Reaktionsenergie von Wasserstoff in einer Brennstoffzelle auf bekannte Weise in elektrische Energie umgewandelt werden.

Voraussetzung für die Verwendung von Wasserstoff als Energieträger ist jedoch, dass er zunächst aus einem Rohstoff, also einem wasserstoffhaltigen Medium gewonnen wird. Als Rohstoffe werden im Stand der Technik Erdgas, Kohlenwasserstoffe, Biomasse, Wasser und andere wasserstoffhaltige Verbindungen eingesetzt.

Das gegenwärtig am weitesten verbreitete Verfahren zur Gewinnung von Wasserstoff ist die Dampfreformierung, die im industriellen Maßstab eingesetzt wird. Obwohl die Dampfreformierung ein etabliertes und wirtschaftliches Verfahren ist, ist sie grundsätzlich mit einem hohen Prozessaufwand verbunden und kann nur im industriellen Maßstab sinnvoll ausgeführt werden. Sie eignet sich jedoch nicht für die dezentrale Erzeugung von Wasserstoff in kleineren Mengen oder gar nach Bedarf.

Ein weiteres etabliertes Verfahren ist die partielle Oxidation, bei der der Rohstoff, beispielsweise Erdgas oder Schweröl, substöchiometrisch in einem exothermen Prozess umgesetzt wird. Die Reaktionsprodukte sind dann vornehmlich Wasserstoff und Kohlenmonoxid.

Ein anderer Ansatz besteht aus der Gewinnung von Wasserstoff aus Biomasse, insbesondere durch Dampfreformierung oder Pyrolyse und Biomassevergasung.

Ein weiterer vielversprechender Ansatz besteht in der Fermentation von Biomasse, bei der Wasserstoff mit Hilfe von anaeroben Mikroorganismen direkt aus der Biomasse gewonnen werden kann. Dieses Verfahren hat jedoch noch keinen praxistauglichen Wirkungsgrad erreicht.

Ein weiterer Ansatz besteht in der photobiologischen Herstellung von Wasserstoff als Nebenprodukt der Photosynthese von Algen. Dieses Verfahren ist vollständig CO₂-neutral und in der Theorie daher sehr attraktiv, allerdings noch weit von einer wirtschaftlichen Umsetzung entfernt.

Ein weiteres bekanntes Verfahren zur Gewinnung von Wasserstoff ist die Elektrolyse, bei der Wasser als Wasserstofflieferant dient. Leider ist dabei der energetische Wirkungsgrad mit knapp über 50% vergleichsweise gering, sodass sich die Elektrolyse aus diesem Grund nicht als Verfahren der Wahl etablieren konnte. Außerdem nutzen sich die Elektroden in Folge der elektrochemische Vorgänge bei der Elektrolyse stark ab.

Die US 2007/0284244 A1 offenbart ein Elektrolysesystem mit einem Elektrolysetank, einer Membran, die den Tank in zwei Bereiche unterteilt, und einem Paar von Niederspannungselektroden, die aus einem ersten Material bestehen. Ferner umfasst sie ein Paar von Niederspannungselektroden, die aus einem zweiten Material bestehen, welches vom ersten Material verschieden ist und ein Paar von Hochspannungselektroden, die aus demselben Material bestehen können wie die Elektroden des ersten oder des zweiten Paars oder aus einem anderen Material bestehen können. Zwischen den Hochspannungselektroden können Hochspannungspulse mit Spannungen von bis zu 50 kV angelegt werden.

Die US 2010/0003556 A1 offenbart einen Reformer, der eine Plasmazone enthält, um eine vorgeheizte Mischung von Reaktanten zu empfangen und die Reaktanten durch Anlegen eines elektrischen Potenzials zu ionisieren. Eine erste thermisch leitfähige Fläche umgibt die Plasmazone und ist dazu eingerichtet, Wärme von einer externen Wärmequelle in die Plasmazone zu übertragen. Der Reformer enthält ferner eine Reaktionszone, um die ionisierten Reaktanten chemisch in ein Synthesegas umzuwandeln, das Wasserstoff und Kohlenmonoxyd umfasst.

Eine zweite thermisch leitfähige Fläche umgibt die Reaktionszone und ist dazu ausgelegt, Wärme von der externen Wärmequelle in die Reaktionszone zu übertragen. Die erste thermisch leitfähige Fläche und die zweite thermisch leitfähige Fläche sind jeweils der externen Wärmequelle ausgesetzt.

Ein weiterer Plasmareformer ist in der US 2009/0035619 offenbart.

Wie aus der obigen Zusammenfassung des bekannten Standes der Technik zu entnehmen ist, gibt es eine Vielzahl von Versuchen, den wichtigen Energieträger Wasserstoff zu gewinnen. In wirtschaftlicher Hinsicht ist das klassische, nicht-CO₂-neutrale Verfahren der Dampfreformierung bisher durch alternative Verfahren nicht erreicht. Der Erfindung liegt die Aufgabe zugrunde, ein alternatives Verfahren zur Gewinnung von Wasserstoff aus einem wasserstoffhaltigen Medium anzugeben. Vorzugsweise soll das Verfahren so geartet sein, das es sich mit verhältnismäßig geringem apparativen und prozessualen Aufwand durchführen lässt und sich somit in kleinen, dezentralen oder sogar mobilen Einheiten realisieren lässt.

Diese Aufgabe wird durch eine Einrichtung nach Anspruch 1 und ein Verfahren nach Anspruch 14 gelöst. Vorteilhafte Weiterbildungen sind in den abhängigen Ansprüchen definiert.

Erfindungsgemäß umfasst eine Einrichtung zur Gewinnung von Wasserstoff aus einem wasserstoffhaltigen Medium eine erste und eine zweite Elektrodenanordnung, zwischen denen ein Zwischenraum ausgebildet ist, durch den ein wasserstoffhaltiges Medium durchleitbar ist, und eine Spannungsquelle zum Erzeugen einer Hochspannung zwischen der ersten und der zweiten Elektrodenanordnung, um im genannten Zwischenraum ein elektrisches Feld zu erzeugen, das geeignet ist, Wasserstoff von Molekülen des wasserstoffhaltigen Mediums abzutrennen. Anders als beispielsweise die Elektrolyse von Wasser basieren die Einrichtung und das Verfahren der Erfindung auf der direkten Abtrennung von Wasserstoffionen von den wasserstoffhaltigen Molekülen, beispielsweise Wassermolekülen infolge eines starken elektrischen Feldes. Anschaulich gesprochen wird das Molekül im sehr starken elektrischen Feld in H⁺ und OH⁻-Ionen aufgespalten und der so gewonnene Wasserstoff kann dann abtransportiert werden.

Allerdings besteht die Gefahr, dass derartig hohe Felder zu Funkenentladungen oder Teilentladungen bzw. Durchschlägen führen, die eine Knallgasreaktion von Wasserstoff und Luft erzeugen können. Aus diesem Grund scheint es auf den ersten Blick nicht möglich, ausreichend hohe Feldstärken unter Vermeidung von Durchschlägen und Entladungen zu erzeugen.

Der Erfinder hat jedoch festgestellt, dass sich eine Hochspannung zur Abtrennung von Wasserstoff auch unter Vermeidung von Durchschlägen realisieren lässt, wenn eine spezielle Elektrodenanordnung gewählt wird, die mindestens eine Elektrode umfasst, die eine abgerundete, insbesondere kugelartige Gestalt oder ein Abschnitt mit einer solchen Gestalt aufweist. Durch die Verwendung einer abgerundeten bzw. Kugelgestalt der Elektroden oder Elektrodenabschnitte der Elektrodenanordnung können lokale Spitzen in der elektrischen Feldstärke vermieden und dadurch Entladungen verhindert werden. Gleichzeitig erlaubt eine derartige Elektrodengestalt einen ausreichend geringen Abstand zwischen der ersten und der zweiten Elektrode zur Erzeugung eines ausreichend starken elektrischen Feldes.

Bei der genannten abgerundeten Gestalt kann es sich insbesondere um folgende Gestalten handeln:
- eine Kugel- oder Teilkugelgestalt,
- eine Gestalt mit einem zylindrischen Körper mit abgerundeten Endflächen, insbesondere halbkugelförmigen Endflächen, oder
- eine Toroidgestalt bzw. eine spezielle Kontur mit stetigen Feldstärkeübergängen nach einem Rogowski-Profil.

Vorzugsweise ist der Zwischenraum zwischen der ersten und der zweiten Elektrodenanordnung an mindestens einer Stelle zu einem Spalt verengt, der höchstens 3 mm, vorzugsweise höchstens 2 mm breit ist. In einem derartig engen Spalt kann die elektrische Feldstärke ausreichend hoch sein, um den Wasserstoff vom Molekül abzutrennen. Man beachte, dass zur Trennung des Wasserstoffs nur eine lokal erhöhte Feldstärke benötigt wird, wie sie in einem derartigen Spalt auftritt. Nachdem der Wasserstoff vom Molekül getrennt ist, reichen durchaus geringere Feldstärken, um eine Rekombination zu verhindern und den Wasserstoff abzutrennen. Wie nachstehend anhand eines Ausführungsbeispiels erläutert wird, eignen sich Elektrodenanordnungen mit den genannten abgerundeten Elektroden oder Elektrodenabschnitten zudem für die Erzeugung einer geeigneten Feldverteilung.

Während die Verwendung mindestens einer Elektrode mit der genannten abgerundeten Gestalt als für die Erfindung unerlässlich angesehen wird, umfassen Weiterbildungen der Erfindung weitere Maßnahmen, die die Erzeugung hoher lokaler Feldstärken bei Vermeidung einer Entladung begünstigen und die die Erfindung in unterschiedlichen Kombinationen weiterbilden können.

Erfindungsgemäß ist jedoch die Spannungsquelle dazu eingerichtet, Spannungspulse mit einer zeitlichen Dauer von weniger als 1 µs zu erzeugen. Dahinter steht die Erkenntnis, dass eine Funkenentladung stets eine gewisse Zeit für den Ladungsaufbau benötigt. Wenn der Spannungspuls jedoch kürzer gewählt wird als die für die Funkenentladung benötigte Zeit, kann eine Funkenbildung selbst dann vermieden werden, wenn der Spannungspuls eine Amplitude hat, die bei länger anliegender Spannung sicher zu einem Durchschlag führen würde. Um einen Durchschlag zu vermeiden, sollte die Dauer des Spannungspulses wie oben erwähnt geringer als 1 µs gewählt werden. Die dem Spannungspuls entsprechende kurzzeitig erhöhte elektrische Feldstärke reicht aus, um den Wasserstoff vom Molekül zu trennen. Zum Abtransport des Wasserstoffs und zur Vermeidung einer Rekombination reicht dann eine geringere, beispielsweise konstante elektrische Feldstärke aus, die unterhalb der Durchschlagsgrenze liegt.

Vorzugsweise ist die Spannungsquelle dazu eingerichtet, eine Gleichspannung zu erzeugen, die durch die genannten Spannungspulse moduliert ist. Vorzugsweise haben die Spannungspulse eine Amplitude von mindestens 50 kV, vorzugsweise mindestens 100 kV, besonders vorzugsweise mindestens 500 kV. In einer besonders vorteilhaften Ausführungsform beträgt die Amplitude der Spannungspulse bis zu einigen MV.

Erfindungsgemäß sind die Spannungsquelle, der Krümmungsradius der Elektrode oder des Elektrodenabschnittes und die Spaltbreite so gewählt, dass bei maximaler

Spannungsamplitude Feldstärken von mindestens 100 kV/mm, vorzugsweise mindestens 500 kV/mm bis zu einigen MV/mm erzeugt werden.

In einer vorteilhaften Weiterbildung ist zumindest ein Teil der Elektrode, die eine abgerundete Gestalt oder einen Abschnitt mit einer solchen Gestalt aufweist, mit einer Isolierschicht überzogen. Die Isolierschicht dient ebenfalls zur Vermeidung eines Durchschlags und weist vorzugsweise eine Dielektrizitätskonstante εᵣ auf, die größer als diejenige von Wasser (εᵣ = 81) ist.

In einer bevorzugten Weiterbildung umfasst die Elektrodenanordnung eine Mehrzahl von abgerundeten Elektroden oder Elektrodenabschnitten, deren jeweilige Oberflächen unterschiedliche Krümmungsradien aufweisen. Falls es sich bei den "abgerundeten Elektroden" um kugelförmige Elektroden oder Elektrodenabschnitte handelt, bedeutet dies einfach, dass Kugeln bzw. Kugelabschnitte mit unterschiedlichem Durchmesser verwendet werden. Je geringer der Durchmesser einer Kugelelektrode, desto höher ist - bei gleichem anliegenden Potential - die elektrische Feldstärke. Mit anderen Worten kann durch eine Anordnung von Kugeln mit unterschiedlichem Durchmesser eine geeignete Feldverteilung erzeugt werden bzw. die Feldstärke gesteuert werden.

Wenn es sich bei den abgerundeten Elektroden oder Elektrodenabschnitten nicht um Kugeln, sondern um andere Körper mit abgerundeter Gestalt handelt, so hängt die Feldstärke nicht mehr vom Durchmesser, sondern vom lokalen Krümmungsradius der Elektrode ab. Wenn in der folgenden Darstellung der Einfachheit halber vornehmlich auf kugelförmige Elektroden Bezug genommen wird, so versteht sich, dass alles Gesagte sinngemäß auch für andere abgerundete Körper gelten soll, bei denen der Krümmungsradius der Oberfläche sinngemäß dem Radius einer Kugelelektrode entspricht.

Vorzugsweise nimmt der Krümmungsradius bei zumindest einem Teil der Elektroden oder Elektrodenabschnitte aus der genannten Mehrzahl von Elektroden oder Elektrodenabschnitten entlang der Flussrichtung des wasserstoffhaltigen Mediums im Zwischenraum ab. Das bedeutet, dass die Krümmung der Elektroden oder Elektrodenabschnitte in einem stromaufwärtigen Bereich des Zwischenraums stärker und damit die Feldstärke höher ist als in einem stromabwärtigen Bereich. Dadurch wird erreicht, dass die wasserstoffhaltigen Moleküle in einem stromaufwärtigen Bereich des Zwischenraums die größte Feldstärke erfahren und dort der Wasserstoff abgetrennt wird. In einem stromabwärtigen Bereich werden dann lediglich geringere Feldstärken benötigt, um eine Rekombination zu verhindern und den Wasserstoff abzutransportieren. Diese Anordnung ist ein Beispiel für die oben genannte Steuerung des Feldes durch Anordnung von kugelartigen bzw. abgerundeten Elektroden aufgrund ihres Krümmungsradius.

Zusätzlich oder alternativ können die Krümmungsradien mit zunehmendem Abstand von dem Zwischenraum zunehmen. Dahinter steht die Überlegung, dass der abgetrennte Wasserstoff bei seinem Transport aus dem Zwischenraum heraus keine so starken elektrischen Felder benötigt, wie bei dessen Abtrennung im Zwischenraum.

In einer vorteilhaften Weiterbildung umfasst die Elektrode mindestens einen Elektrodenkörper mit abgerundeter, insbesondere kugelartiger Gestalt, dessen Oberfläche einen ersten minimalen Krümmungsradius aufweist und auf dessen Oberfläche eine Mehrzahl kleinerer abgerundeter Elektroden angeordnet ist, deren Oberfläche einen zweiten minimalen Krümmungsradius aufweist, der geringer als der erste Krümmungsradius ist. Eine derartige Elektrode kann beispielsweise durch einen kugelförmigen Elektrodenkörper gebildet werden, an dessen Oberfläche weitere kugelförmige bzw. teilkugelförmige Elektroden mit geringerem Radius angeordnet sind, und die demnach einen geringeren Krümmungsradius aufweisen. Die obige Formulierung umfasst aber auch eine Verallgemeinerung dieses Konzepts auf nichtkugelförmige Elektroden.

Während die oben beschriebenen Ausführungsformen vornehmlich der Vermeidung von Durchschlägen bei den erforderlichen hohen elektrischen Feldstärken dienen, sieht eine weitere Weiterbildung der Erfindung Maßnahmen vor, die für die Abtrennung von Wasserstoff erforderlichen Feldstärken selbst zu verringern. Zu diesem Zweck ist vorzugsweise eine Einrichtung vorgesehen, durch die das wasserstoffhaltige Medium vor Eintritt in den Zwischenraum geleitet werden kann und die ein elektrisches oder magnetisches Feld zum Ausrichten der wasserstoffhaltigen Moleküle bereitstellt, derart, dass das abzutrennende H-Atom des Moleküls bei Eintritt in das elektrische Feld zwischen der ersten und der zweiten Elektrodenanordnung bevorzugt auf der der negativen Elektrode zugewandten Seite des Moleküls liegt. Durch eine derartige Vorausrichtung der wasserstoffhaltigen Moleküle wird die Trennung im starken elektrischen Feld zwischen der ersten und der zweiten Elektrodenanordnung erleichtert, sodass eine Abtrennung des Wasserstoffs schon bei einer geringeren Feldstärke geschehen kann.

Zusätzlich oder alternativ kann eine Einrichtung zum Erwärmen des wasserstoffhaltigen Mediums vor Eintritt in den Zwischenraum zwischen der ersten und der zweiten Elektrodenanordnung und/oder eine Einrichtung zum Zufügen eines Katalysators in das wasserstoffhaltige Medium vorgesehen sein. Durch Erwärmung des Mediums oder Zufügen eines geeigneten Katalysators kann die Abtrennung des Wasserstoffs durch das starke elektrische Feld ebenfalls erleichtert werden.

In einer vorteilhaften Weiterbildung ist eine Steuerung zur Steuerung der Zufuhr des wasserstoffhaltigen Mediums in den Zwischenraum in Abhängigkeit von dem aktuellen Bedarf eines Abnehmers von Wasserstoff vorgesehen, der mit der Einrichtung zur Gewinnung von Wasserstoff gekoppelt ist, um den erzeugten Wasserstoff aufzunehmen. Auf diese Weise kann der Wasserstoff dann und in dem Umfang erzeugt werden, wie er von einem Abnehmer benötigt wird, sodass sich eine Zwischenspeicherung erübrigt. Dies ist von besonderem Vorteil, da die Speicherung von Wasserstoff bekanntlich schwierig und mit Energieverlust behaftet ist. Da die Einrichtung der Erfindung äußert einfach aufgebaut ist, kurzfristig ein- und ausschaltbar und hinsichtlich des Durchsatzes einstellbar ist, eignet sie sich auf ideale Weise für die bedarfsgerechte Erzeugung von Wasserstoff ohne Zwischenspeicherung. Tatsächlich eignet sie sich aufgrund ihres Aufbaus sogar für eine mobile Ausgestaltung beispielsweise in einem Fahrzeug.

In einer vorteilhaften Ausführungsform umfasst die erste und die zweite Elektrodenanordnung jeweils mindestens eine Elektrode, die eine abgerundete, insbesondere kugelartige Gestalt oder einen Abschnitt mit einer solchen Gestalt hat, und ist an einer der beiden Elektroden mindestens ein länglicher, insbesondere stab- oder nadelförmiger Abschnitt ausgebildet, der sich von dieser Elektrode in Richtung auf die andere Elektrode erstreckt.

Bei dieser Anordnung kann mithilfe der abgerundeten, beispielsweise kugelförmigen Elektroden ein gut definierbares elektrisches Grundfeld erzeugt werden. Zwischen dem distalen Ende des länglichen Abschnitts und der gegenüberliegenden anderen Elektrode wird das elektrische Grundfeld lokal überhöht, wodurch die Abtrennung von Wasserstoff erreichbar ist. Die Erfinder haben sowohl in Simulationen als auch in Experimenten bestätigt, dass das mit einem solchen Aufbau erzeugbare lokale elektrische Feld Stärken von 1 MV/mm erreichen kann und dennoch bei ausreichend kurz gepulster Spannung ein Durchschlag vermieden werden kann.

Vorzugsweise weist der mindestens eine längliche Abschnitt an seinem distalen Ende eine Spitze auf.

Die Erfinder haben festgestellt, dass die Geometrie besonders gut geeignet ist, wenn die Länge des länglichen Abschnitts zwischen 8 mm und 20 mm beträgt. Ferner beträgt der Abstand zwischen dem distalen Ende des länglichen Abschnitts und der anderen Elektrode vorzugsweise 2 mm bis 20 mm.

Ferner hat es sich als vorteilhaft herausgestellt, wenn die andere der beiden Elektroden, d.h. diejenige, an der der längliche Abschnitt nicht ausgebildet ist, einen Durchmesser von 10 mm bis 30 mm hat. Diese andere Elektrode ist dabei vorzugsweise kugelförmig oder teilkugelförmig. Die eine Elektrode, d.h. die Elektrode, an der der mindestens eine längliche Abstand ausgebildet ist, hat vorzugsweise einen größeren Durchmesser als die andere Elektrode.

In einer vorteilhaften Weiterbildung können an der einen Elektrode auch mehrere, beispielsweise zwei oder vier derartiger länglicher Abschnitte angeordnet sein, die vorzugsweise parallel zueinander ausgerichtet sind. Dabei beträgt der Abstand zwischen benachbarten länglichen Abschnitten vorzugsweise 10 mm bis 50 mm.

Durch die Verwendung mehrerer derartiger länglicher Abschnitte kann die Feldüberhöhung an mehreren benachbarten Stellen erreicht werden und somit der Durchsatz der Wasserstoffproduktion erhöht werden.

In einer besonders bevorzugten Ausführungsform sind die mehreren länglichen Abschnitte jeweils unterschiedlichen Elektroden der anderen Elektrodenanordnung gegenüber angeordnet und erstrecken sich auf diese. In dieser Anordnung könnte beispielsweise eine großkugelförmige Elektrode mit einer Mehrzahl von länglichen Abschnitten vorgesehen sein, denen jeweils eine zugehörige kleine, beispielsweise ebenfalls kugelförmige Elektrode der anderen Elektrodenanordnung zugeordnet ist.

### KURZBESCHREIBUNG DER FIGUREN

- Fig. 1: zeigt eine schematische Darstellung einer Einrichtung zur Gewinnung von Wasserstoff nach einer Weiterbildung der Erfindung.
- Fig. 2: zeigt eine Weiterbildung der Einrichtung von Fig. 1.
- Fig. 3: zeigt eine weitere Weiterbildung der Einrichtung von Fig. 1
- Fig. 4 bis 6: zeigen vorteilhafte Ausgestaltungen von Elektroden.

### BESCHREIBUNG DER BEVORZUGTEN AUSFÜHRUNGSBEISPIELE

Zum besseren Verständnis der vorliegenden Erfindung wird im Folgenden auf die in den Zeichnungen dargestellten bevorzugten Ausführungsbeispiele Bezug genommen, die anhand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an der gezeigten Einrichtung und dem beschriebenen Verfahren sowie derartige weitere Anwendungen der Erfindung, wie sie darin aufgezeigt sind, als übliches derzeitiges oder künftiges Fachwissens eines zuständigen Fachmannes angesehen werden.

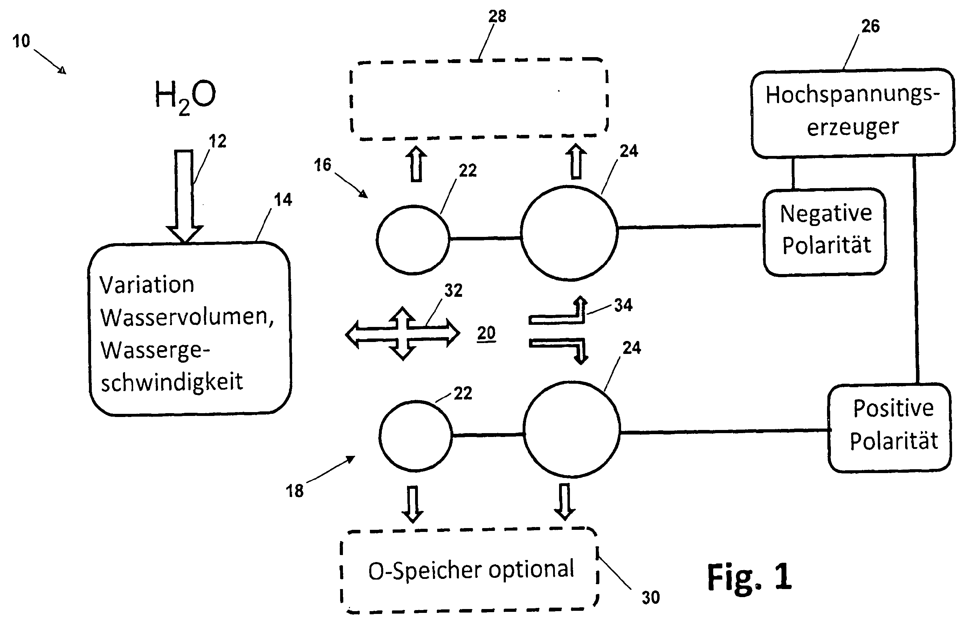

Fig. 1 ist ein Blockdiagramm, das eine Einrichtung zur Gewinnung von Wasserstoff aus einem wasserstoffhaltigen Medium, im gezeigten Beispiel Wasser (H₂O), schematisch und in keiner Weise maßstabgerecht zeigt.

Die Einrichtung 10 enthält eine Wasserzufuhr 12, die mit einer Einrichtung 14 verbunden ist, die die Wasserzufuhr, insbesondere Wassergeschwindigkeit bzw. Wasservolumen entsprechend einer aktuell benötigten Wasserstoffmenge steuert oder regelt.

Die Einrichtung 10 umfasst ferner eine erste Elektrodenanordnung 16 und eine zweite Elektrodenanordnung 18. Zwischen der ersten und der zweiten Elektrodenanordnung 16, 18 befindet sich ein Zwischenraum, durch den das von der Einrichtung 14 ausgegebene Wasser durchleitbar ist.

Die erste und zweite Elektrodenanordnung 16, 18 umfassen in der schematischen Darstellung von Fig. 1 jeweils eine kleinere kugelförmige Elektrode 22 und eine größere kugelförmige Elektrode 24. Die Kugelelektroden sind in der bevorzugten Ausführungsform mit einer Isolatorschicht überzogen. Die kleinere Kugelelektrode 22 hat hierbei vorzugsweise einen Durchmesser von weniger als 2 - 3 cm, die größere Kugelelektrode 24 einen Durchmesser von 3 - 5 cm. Andere Abmessungen sind ebenfalls möglich. Die Dicke des Isolierstoffüberzuges der Kugelelektrode kann beispielsweise 10 % des Durchmessers derselben betragen. Ein Hochspannungserzeuger 26 ist vorgesehen, der zwischen der ersten und der zweiten Elektrodenanordnung 16, 18 eine Hochspannung anlegt. Ferner sind in Fig. 1 ein optionaler Wasserstoffspeicher 28 und ein optionaler Sauerstoffspeicher 30 vorgesehen.

Man beachte, dass die Darstellung von Fig. 1 lediglich schematisch ist, und das die erste und zweite Elektrodenanordnung 16, 18 eine Vielzahl von kugelförmigen Elektroden umfassen kann, die beispielsweise in Form eines zweidimensionalen Gitters angeordnet sein können.

Bei der Einrichtung von Fig. 1 wird im Zwischenraum 20 lokal ein ausreichend starkes elektrisches Feld erzeugt, das eine Aufspaltung von Wasser in H⁺ und OH⁻ erzeugt. Dieses sehr starke elektrische Feld beträgt in der bevorzugten Ausführungsform mehr als 1 MV/mm. In der schematisch gezeigten Ausführungsform von Fig. 1 ist dieses starke elektrische Feld in einem schmalen Spalt zwischen den kleinen Kugelelektroden 22 der ersten und zweiten Elektrodenanordnung 16, 18 ausgebildet, der im bevorzugten Ausführungsbeispiel weniger als 2 mm breit ist. Die Verwendung der Kugelelektrode 22 mit kleinerem Durchmesser eignet sich für die Erzeugung der besonders hohen Feldstärke, da die Feldstärke bei gleichem Potential mit abnehmendem Kugelradius zunimmt.

Die in Flussrichtung des Wassers im Zwischenraum 20 stromabwärts angeordneten Kugelelektroden 24 mit größerem Radius erzeugen dementsprechend ein geringeres elektrisches Feld. Diese ist allerdings ausreichend, da die maximale Feldstärke nur zum Trennen des Wasserstoffs vom Wasserstoffmolekül benötigt wird, jedoch zur Vermeidung einer Rekombination und den Abtransport des Wasserstoffs, d.h. der Wasserstoffionen geringere Feldstärken ausreichen.

In Fig. 1 ist die Abspaltung von Wasserstoff im Bereich der Kugelelektroden 22 mit geringerem Radius schematisch durch die gekreuzten Pfeile 32 dargestellt. Der Abtransport des bereits getrennten Wasserstoff im Bereich der Kugelelektrode 24 mit größerem Radius ist symbolisch durch die getrennten Pfeile 34 dargestellt. Der Abtransport des leichten Wasserstoffes wird durch die vertikale Beabstandung der Elektrodenanordnungen 16, 18 begünstigt. Es kann ferner ein Isoliergas vorgesehen sein, das die entstehenden OH⁻-Ionen bindet.

Die Kugelstruktur der Elektroden 22, 24 hat eine zweifache Funktion. Aufgrund der abgerundeten Oberfläche der Elektroden werden Spitzen und Kanten vermieden, die eine ungewollte lokale Feldstärkenerhöhung vermeiden, die ihrerseits zu Entladungen und Durchschlägen führen können. Derartige Entladungen müssen vermieden werden, weil sie beispielsweise in Anwesenheit von Sauerstoff zu einer Knallgasreaktion führen könnten.

Eine weitere in der schematischen Darstellung von Fig. 1 grundsätzlich zu erkennende Funktion der Kugelelektroden besteht darin, dass die lokale Feldstärke über den Radius der Kugeln gesteuert werden kann. Dadurch ergibt sich die Möglichkeit, durch eine geeignete Verteilung von kugelförmigen Elektroden mit geeigneten Radien eine Feldverteilung zu erzeugen, die für die Abtrennung von Wasserstoff und den Abtransport von Wasserstoff geeignet ist, ohne dass jede der Elektroden eine gesonderte Ansteuerung mit einem speziell ermittelten Potential benötigt.

Obwohl in der Ausführungsform von Fig. 1 kugelförmige Elektroden 22 und 24 gezeigt sind, versteht es sich, dass sich dieses Konzept auf andere Elektrodengestalten übertragen lässt, die Spitzen und Kanten vermeiden. An die Stelle des Kugelradius in der Erläuterung von Fig. 1 tritt dann der lokale Krümmungsradius im entsprechenden Abschnitt der Elektrode.

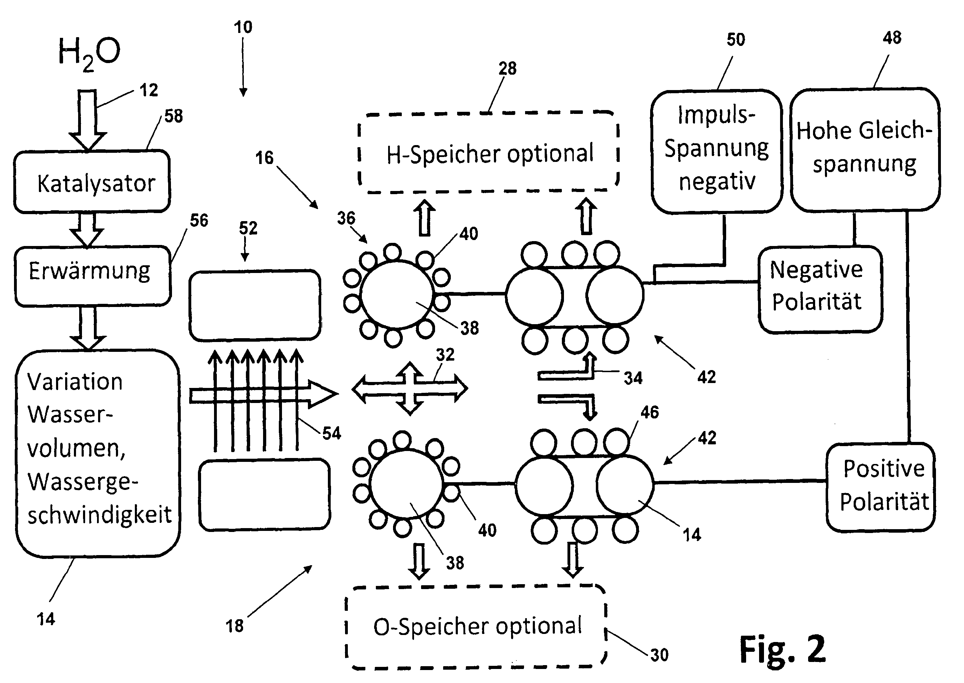

Fig. 2 zeigt eine Weiterbildung der Einrichtung 10, die auf dem in Fig. 1 vorgestellten Konzept basiert. Gleiche oder einander entsprechende Komponenten in Fig. 1 und 2 sind mit gleichen Bezugszeichen bezeichnet.

In der Darstellung von Fig. 2 umfassen die erste und die zweite Elektrodenanordnung 16, 18 eine Elektrode 36 bestehend aus einer kugelförmigen Elektrodenkörper 38, an dessen Oberfläche kleinere kugelförmige bzw. teilkugelförmige Elektroden 40 angeordnet sind. Ferner umfassen die erste und die zweite Elektrodenanordnung 16, 18 von Fig. 2 eine Elektrode 42, bestehend aus einem zylindrischen Grundkörper 44 mit halbkugelförmig abgerundeten Stirnflächen, auf dessen Mantel kleinere Kugelelektroden 46 ausgebildet sind. Derartige Elektroden sind für die erwünschte Steuerung der Feldstärke von besonderem Vorteil.

Obwohl dies in Fig. 2 nicht speziell gezeigt ist, sind auch die Elektroden 36 und 42 mit einem Isolatormaterial überzogen. Hierzu können vorzugsweise Feststoffisolationen mit einer hohen Dielektrizitätskonstante εᵣ > 100 zum Einsatz kommen, beispielsweise Ferroelektrika (z. B. Bariumtitanat o. ä.).

Wie Fig. 2 weiter zu entnehmen ist, umfasst der Hochspannungserzeuger 26 in dieser Weiterbildung eine Gleichspannungsquelle 48 und einen Pulserzeuger 50 zum Erzeuger kurzer Spannungspulse. Somit ist der Hochspannungserzeuger 26 in der Lage, eine hohe Gleichspannung zu erzeugen, die mit kurzen Spannungspulsen überlagert ist.

Die von dem Pulserzeuger 50 erzeugten Spannungspulse sind extrem kurz, insbesondere kürzer als 1 µs. Ihre Amplitude beträgt jedoch mindestens 50 kV, vorzugsweise mindestens 100 kV bis zu einigen MV. Damit lassen sich während des Pulses im Spalt zwischen der ersten und der zweiten Elektrodenanordnung 16, 18 kurzzeitig elektrische Feldstärken von mehr als 1 MV/mm erreichen, mit denen Wasserstoff vom Wasser abgespalten werden kann.

Der besondere Vorteil dieser kurzen Spannungspulse besteht darin, dass die Pulse zu kurz für den Aufbau eines Durchschlags sind. Auf diese Weise können extrem hohe Feldstärken bei Vermeidung von Durchschlägen erzielt werden. Ferner trägt die genannte Isolationsbeschichtung der Elektroden 36, 42 zur Vermeidung eines Durchschlags bei.

Ferner zeigt Fig. 2 eine Einrichtung 52, durch die das Wasser vor Eintritt in den Zwischenraum 20 geleitet wird und in der die Lage der Wassermoleküle vor-ausgerichtet wird, um eine Abtrennung des Wasserstoffs zu begünstigen. Dazu werden die Wasserstoffmoleküle in einem statischen elektrischen oder magnetischen Feld, das in Fig. 2 symbolisch durch Feldlinie 54 dargestellt ist, so ausgerichtet, dass die H-Atome der Wassermoleküle bei Eintritt in das elektrische Feld zwischen der ersten und zweiten Elektrodenanordnung 16, 18 bevorzugt auf der der ersten Elektrodenanordnung 16 zugewandten Seite des Wassermoleküls liegen.

Ferner ist in Fig. 2 eine Einrichtung 56 zur Erwärmung des Wassers und eine Einrichtung 58 vorgesehen, in der dem Wasser ein Katalysator zugefügt wird, der die Abtrennung von Wasserstoff erleichtert.

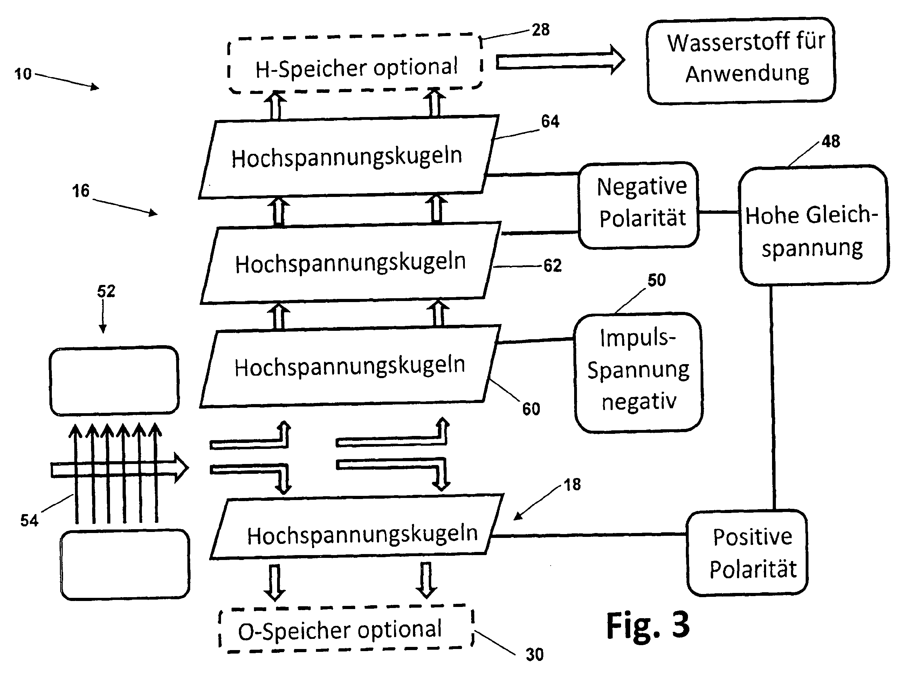

In Fig. 1 und 2 wurde das Konzept der Feldsteuerung in Flussrichtung des Wassers im Zwischenraum 20 mit Hilfe der Krümmungsradien der Elektroden erläutert. Eine ähnliche Steuerung der Feldstärken kann auch in Richtung von dem Zwischenraum 20 fort vorgenommen werden, wie unter Bezugnahme auf Fig. 3 erläutert wird.

Fig. 3 ist ein Blockdiagramm, in dem die Kugelelektroden nicht im Einzelnen dargestellt sind. Wie in Fig. 3 schematisch dargestellt ist, besteht die erste Elektrodenanordnung 16 in dieser Ausführungsform aus drei Schichten 60, 62, 64 aus Kugelelektroden, die in der Darstellung von Fig. 3 übereinander angeordnet sind. Die zweite Elektrode 18 besteht aus einer Schicht von Kugelelektroden, die auf einem positiven konstanten Potential liegen.

Die unterste Schicht 60 von Kugelelektroden der ersten Elektrodenanordnung 16 ist mit einem Impulserzeuger 50 verbunden. Mit diesem Impulserzeuger 50 können während der Pulse sehr starke elektrische Felder zwischen der untersten Schicht 60 der ersten Elektrodenanordnung 16 und der zweiten Elektrodenanordnung 18 erzeugt werden, die zum Abtrennen des Wasserstoffs geeignet sind.

Die zweite Schicht aus Kugelelektroden 62 befindet sich auf einem negativen Potential, sodass zwischen dieser Schicht 62 und der zweiten Elektrode 18 kontinuierlich eine hohe Gleichspannung anliegt.

Die dritte Schicht 64 aus Kugelelektroden befindet sich auf einem noch negativeren Potential als die zweite Schicht 62, allerdings ist die Gleichspannung zwischen diesen Schichten geringer als die Spannung zwischen der zweiten Schicht 62 und der zweiten Elektrode 18.

Bei diesem Aufbau der ersten Elektrode 18 wird die extrem hohe Spannung nur da erzeugt, wo sie zum Abtrennen des Wasserstoffs benötigt wird. Die Feldstärke nimmt im Bereich der ersten Elektrodenanordnung 18 mit zunehmenden Abstand von dem Zwischenraum 20 ab und dient lediglich dem Abtransport der positiven Wasserstoffionen.

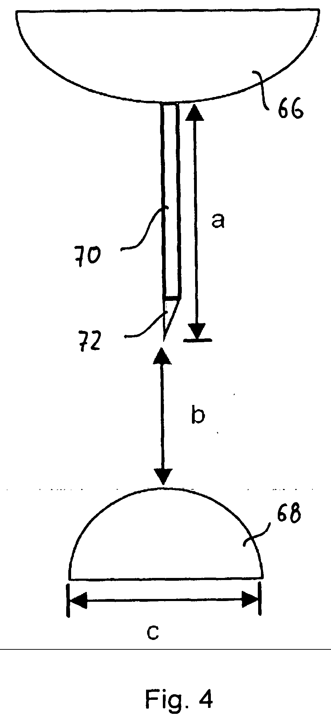

Fig. 4 zeigt eine alternative Elektrodengeometrie mit einer ersten Elektrode 66, die Teil einer ersten Elektrodenanordnung und einer zweiten Elektrode 68, die Teil einer zweiten Elektrodenanordnung sein kann. Obwohl die Elektroden 66, 68 in der schematischen Darstellung von Fig. 4 teilkugelförmig dargestellt sind, können sie auch als ganze Kugeln oder andere abgerundete Körper ausgebildet sein. Die erste und die zweite Elektrode 66, 68 haben somit eine abgerundete, insbesondere kugelartige Gestalt oder zumindest einen Abschnitt mit einer solchen Gestalt, mit denselben Vorteilen, die oben beschrieben wurden. Durch diese abgerundeten Elektroden 66, 68 kann ein definiertes elektrisches Feld erzeugt werden. Dieses Feld wird als Grundfeld bezeichnet und ist für sich genommen noch nicht stark genug, um Wasserstoff abzuspalten.

Ferner ist an der ersten Elektrode 66 ein länglicher Abschnitt 70 ausgebildet, der sich von der ersten Elektrode 66 in Richtung auf die zweite Elektrode 68 erstreckt. Der längliche Abschnitt 70 ist in der gezeigten Ausführungsform stab- bzw. nadelförmig und weist an seinem distalen Ende eine Spitze 72 auf. Durch den länglichen Abschnitt 70 wird zwischen der Spitze 72 und der zweiten Elektrode 68 eine lokale Felderhöhung erzeugt, mit Feldstärken, die zur Abspaltung von Wasserstoff ausreichen. In Experimenten und Simulationen konnten die Erfinder mit einer derartigen Geometrie Feldstärken von 1 MV/mm erzeugen. Gleichzeitig waren die Spannungspulse kurz genug, dass es dennoch nicht zu Entladungen bzw. Durchschlägen kam. Bevorzugte Dauern von Spannungspulsen liegen zwischen 10 und 300 ns.

Bei besonders geeigneten Geometrien beträgt die Länge a des stabförmigen Abschnittes 70 zwischen 8 mm und 20 mm. Der Abstand b zwischen dem distalen Ende des länglichen Abschnitts 70 und der an der zweiten Elektrode 68 beträgt vorzugsweise 2 mm bis 20 mm.

Bei diesem Aufbau hat die erste Elektrode 66, d.h. die Elektrode, die den länglichen Abschnitt 70 aufweist, vorzugsweise einen größeren Durchmesser als die zweite Elektrode 68. Besonders geeignete Konfigurationen weisen einen Durchmesser c der zweiten Elektrode 68 von 10 mm bis 30 mm auf.

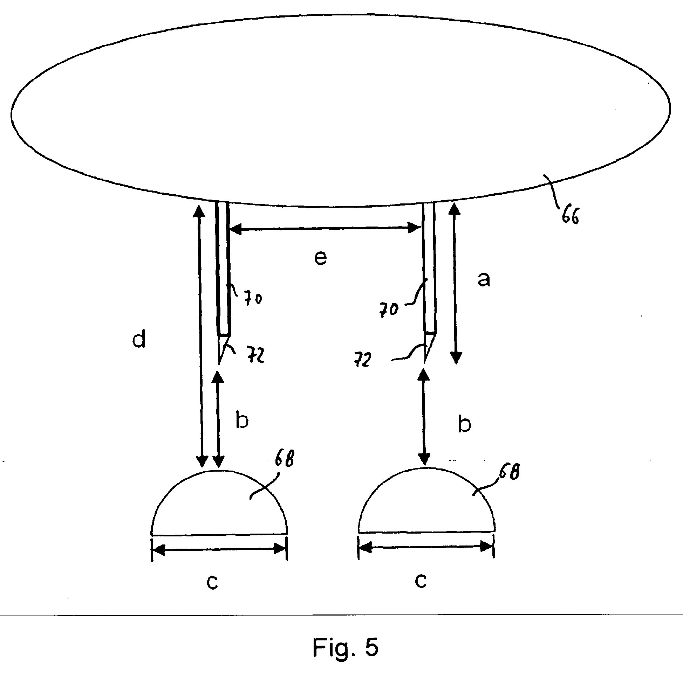

Fig. 5 zeigt eine verwandte Geometrie mit einer ersten Elektrode 66, die in diesem Beispiel jedoch zwei längliche Abschnitte 70 aufweist. Messungen und Simulationen haben ergeben, dass der Abstand e zwischen benachbarten länglichen Abschnitten 70 vorzugsweise 10 mm bis 50 mm beträgt. Ferner ist in Fig. 5 eine Länge d eingezeichnet, die der Summe der Längen a und b entspricht und somit vorzugsweise zwischen 10 mm und 40 mm beträgt.

Wie in Fig. 5 weiter gezeigt ist, sind die beiden länglichen Abschnitte 70 jeweils unterschiedlichen Elektroden 68 der zweiten Elektrodenanordnung gegenüber angeordnet und erstrecken sich auf diese. Die bevorzugten Abmessungen dieser zweiten Elektroden 68 sind dieselben wie in Fig. 4, d.h. der Durchmesser der zweiten Elektroden 68 beträgt vorzugsweise zwischen 10 mm und 30 mm.

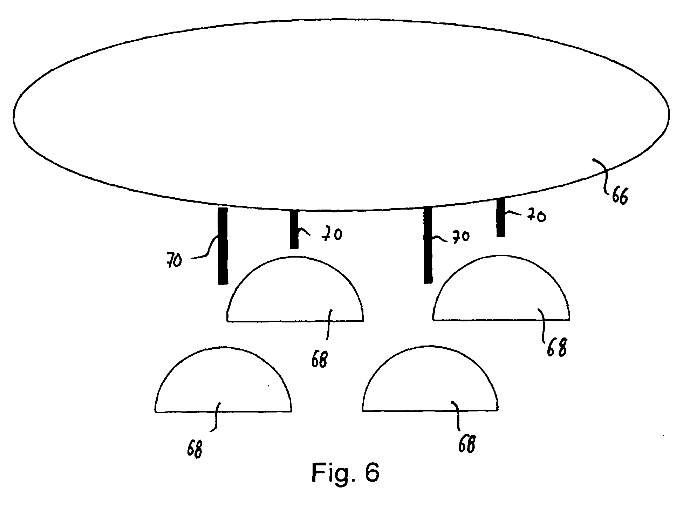

Fig. 6 zeigt eine weitere Variante, bei der vier längliche Abschnitte 70 an der ersten Elektrode 66 angeordnet sind, die sich auf jeweils eine zugehörige zweite Elektrode 68 der zweiten Elektrodenanordnung erstrecken. In Fig. 6 sind die Spitzen 72 der Einfachheit halber weggelassen.

Obgleich in den Zeichnungen und in der vorhergehenden Beschreibung bevorzugte Ausführungsbeispiele aufgezeigt und detailliert beschrieben sind, sollte diese als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der beigefügten Ansprüche liegen, geschützt werden sollen.

### Bezugszeichenliste

- 10: Einrichtung zur Gewinnung von Wasserstoff
- 12: Wasserzufuhr
- 14: Einrichtung zur Steuerung von Wasservolumen/Wassergeschwindigkeit
- 16: erste Elektrodenanordnung
- 18: zweite Elektrodenanordnung
- 20: Zwischenraum zwischen erster und zweiter Elektrodenanordnung 16, 18
- 22: Kugelelektrode
- 24: Kugelelektrode
- 26: Hochspannungsquelle
- 28: Wasserstoffspeicher
- 30: Sauerstoffspeicher
- 32: Abspaltung von Wasserstoff
- 34: Abtransport von Wasserstoff
- 36: Elektrode
- 38: Elektrodenkörper
- 40: kugelförmiger Elektrodenbestandteil
- 42: Elektrode
- 44: Elektrodenkörper
- 46: kugelförmiger Elektrodenbestandteil
- 48: Gleichspannungsquelle
- 50: Impulserzeuger
- 52: Einrichtung zum Ausrichten der Wassermoleküle
- 54: elektrisches Feld/Magnetfeld
- 56: Einrichtung zum Erwärmen von Wasser
- 58: Einrichtung zum Zufügen eines Katalysators
- 60: erste Lage von Kugelelektroden
- 62: zweite Lage von Kugelelektroden
- 64: dritte Lage von Kugelelektroden
- 66: erste Elektrode
- 68: zweite Elektrode
- 70: länglicher Abschnitt
- 72: Spitze

## Patentansprüche

1. Einrichtung (10) zur Gewinnung von Wasserstoff aus einem wasserstoffhaltigen Medium, die Folgendes umfasst:
- eine erste und eine zweite Elektrodenanordnung (16, 18), zwischen denen ein Zwischenraum (20) ausgebildet ist, durch den ein wasserstoffhaltiges Medium durchleitbar ist, und
- eine Spannungsquelle (26) zum Erzeugen einer Hochspannung zwischen der ersten und der zweiten Elektrodenanordnung (16, 18), um im genannten Zwischenraum (20) ein elektrisches Feld zu erzeugen, das geeignet ist, Wasserstoff von Molekülen des wasserstoffhaltigen Mediums abzutrennen,
wobei die erste und/oder die zweite Elektrodenanordnung (16, 18) mindestens eine Elektrode (22, 24, 38, 42) umfasst, die eine abgerundete, insbesondere kugelartige Gestalt oder einen Abschnitt mit einer solchen Gestalt aufweist, wobei die Spannungsquelle (26) dazu eingerichtet ist, Spannungspulse mit einer zeitlichen Dauer von weniger als 1µs zu erzeugen und wobei die Spannungsquelle (26, 50), der Krümmungsradius der Elektrode (22, 24) oder des Elektrodenabschnitts (40, 46) und die Spaltenbreite so gewählt sind, dass bei maximaler Spannungsamplitude Feldstärken von mindestens 100 kV/mm erzeugt werden.

2. Einrichtung (10) nach Anspruch 1, bei der die genannte abgerundete Gestalt eine der folgenden Gestalten umfasst:
- eine Kugel- oder Teilkugelgestalt,
- eine Gestalt mit zylindrischem Körper (44) mit abgerundeten, insbesondere halbkugelförmigen Endflächen, oder
- eine Torusgestalt oder eine Gestalt mit stetigen Feldstärkeübergängen nach einem Rogowski-Profil.

3. Einrichtung (10) nach einem der vorhergehenden Ansprüche, bei der der Zwischenraum (20) an mindestens einer Stelle zu einem Spalt verengt ist, der höchstens 3 mm, vorzugsweise höchstens 2 mm breit it.

4. Einrichtung (10) nach einem der vorhergehenden Ansprüche, bei der die Spannungsquelle (26, 50) dazu eingerichtet ist, Spannungspulse mit einer zeitlichen Dauer von weniger als 500 ns und vorzugsweise zwischen 10 und 300 ns zu erzeugen, und/oder
bei der die Spannungsquelle (26, 50) dazu eingerichtet ist, Spannungspulse mit einer Amplitude von mindestens 50 kV, vorzugsweise mindestens 100 kV, besonders vorzugsweise von mindestens 500 kV und insbesondere von mindestens 1 MV zu erzeugen, und/oder
bei der die Spannungsquelle (26, 50), der Krümmungsradius der Elektrode (22, 24) oder des Elektrodenabschnitts (40, 46) und die Spaltenbreite so gewählt sind, dass bei maximaler Spannungsamplitude Feldstärken von mindestens 500 kV/mm, vorzugsweise mindestens 1 MV/mm erzeugt werden.

5. Einrichtung (10) nach Anspruch 4, bei der die Spannungsquelle (26, 48, 50) dazu eingerichtet ist, eine Gleichspannung zu erzeugen, die durch die genannten Spannungspulse moduliert ist.

6. Einrichtung (10) nach einem der vorhergehenden Ansprüche, bei der zumindest ein Teil der Elektroden oder Elektrodenabschnitte (22, 24, 36, 40, 42, 46) mit einer Isolierschicht überzogen ist, und/oder
bei der die erste und/oder zweite Elektrodenanordnung eine Mehrzahl von abgerundeten Elektroden oder Elektrodenabschnitten umfasst, deren jeweiligen Oberflächen unterschiedliche Krümmungsradien aufweisen, wobei der Krümmungsradius vorzugsweise bei zumindest einem Teil der Elektroden oder Elektrodenabschnitte aus der Mehrzahl von Elektroden bzw. Elektrodenabschnitten entlang der Flussrichtung des wasserstoffhaltigen Mediums im Zwischenraum (20) und/oder mit zunehmenden Abstand vom Zwischenraum (20) zunimmt.

7. Einrichtung (10) nach einem der vorhergehenden Ansprüche, bei der die mindestens eine Elektrode (36, 42) einen Elektrodenkörper (38, 44) mit abgerundeter, insbesondere kugelartiger Gestalt umfasst, dessen Oberfläche einen ersten minimalen Krümmungsradius aufweist, und auf dessen Oberfläche eine Mehrzahl kleinerer, abgerundeter Elektroden (40, 46) angeordnet ist, deren Oberfläche einen zweiten minimalen Krümmungsradius aufweist, der geringer als der erste minimale Krümmungsradius ist.

8. Einrichtung (10) nach einem der vorhergehenden Ansprüche, bei der eine Einrichtung (52) vorgesehen ist, durch die das wasserstoffhaltige Medium vor Eintritt in den Zwischenraum (20) geleitet werden kann und die ein elektrisches oder magnetisches Feld (54) zum Ausrichten der wasserstoffhaltigen Moleküle bereitstellt, derart, dass das abzutrennende H-Atom des Moleküls bei Eintritt in das elektrische Feld zwischen der ersten und der zweiten Elektrodenanordnung (16, 18) bevorzugt auf der der negativen Elektrodenanordnung zugewandten Seite des Moleküls liegt.

9. Einrichtung (10) nach einem der vorhergehenden Ansprüche, bei der eine Einrichtung (56) zum Erwärmen des wasserstoffhaltigen Mediums vor Eintritt in den Zwischenraum (20) und/oder eine Einrichtung (58) zum Zufügen eines Katalysators in das wasserstoffhaltige Medium vorgesehen ist, und/oder
bei der eine Steuerung zum Steuern der Zufuhr des wasserstoffhaltigen Mediums in den Zwischenraum (20) in Abhängigkeit von dem aktuellen Bedarf eines Abnehmers von Wasserstoff vorgesehen ist, der mit der Einrichtung (10) zur Aufnahme des erzeugten Wasserstoffs gekoppelt ist.

10. Einrichtung (10) nach einem der vorhergehenden Ansprüche, bei der die erste und die zweite Elektrodenanordnung (16, 18) jeweils mindestens eine Elektrode (66, 68) umfasst, die eine abgerundete, insbesondere kugelartige Gestalt oder einen Abschnitt mit einer solchen Gestalt hat,
und bei der an einer (66) der beiden Elektroden mindestens ein länglicher, insbesondere stab- oder nadelförmiger Abschnitt (70) ausgebildet ist, der sich von dieser Elektrode (66) in Richtung auf die andere Elektrode (68) erstreckt, wobei
der mindestens eine längliche Abschnitt (70) vorzugsweise an seinem distalen Ende eine Spitze (72) aufweist, und/oder wobei
die Länge (a) des mindestens einen länglichen Abschnittes (70) vorzugsweise zwischen 8 und 20 mm beträgt, und/oder wobei
der Abstand (b) zwischen dem distalen Ende des mindestens einen länglichen Abschnittes (70) und der anderen Elektrode (68) 2 bis 20 mm beträgt.

11. Einrichtung (10) nach Anspruch 10, bei der die andere (68) der beiden Elektroden einen Durchmesser (c) von 10 bis 30 mm hat und vorzugsweise kugelförmig oder teilkugelförmig ist, und/oder
bei der die eine Elektrode (66), an der der mindestens eine längliche Abschnitt ausgebildet ist, einen größeren Durchmesser hat als die andere Elektrode (68).

12. Einrichtung (10) nach einem der Ansprüche 10 oder 11, bei der an der einen Elektrode (66) mehrere, insbesondere 2 oder 4 derartiger länglicher Abschnitte (70) angeordnet sind, die vorzugsweise parallel zueinander ausgerichtet sind, wobei
der Abstand (e) benachbarter länglicher Abschnitte (70) vorzugsweise 10 bis 50 mm beträgt.

13. Einrichtung (10) nach Anspruch 12, bei der die mehreren länglichen Abschnitte (70) jeweils unterschiedlichen Elektroden (68) der anderen Elektrodenanordnung gegenüber angeordnet sind und sich in Richtung auf diese erstrecken.

14. Verfahren zur Gewinnung von Wasserstoff aus einem wasserstoffhaltigen Medium, mit den folgenden Schritten:
Durchleiten eines wasserstoffhaltigen Mediums durch einen Zwischenraum (20) zwischen einer ersten und einer zweiten Elektrodenanordnung (16, 18),
Anlegen einer Hochspannung zwischen der ersten und der zweiten Elektrodenanordnung (16, 18), um im genannten Zwischenraum (20) ein elektrisches Feld zu erzeugen, mit dem Wasserstoff von Molekülen des wasserstoffhaltigen Mediums abgetrennt wird,
wobei die erste und/oder die zweite Elektrodenanordnung (16, 18) mindestens eine Elektrode (22, 24, 36, 42) umfasst, die eine abgerundete, insbesondere kugelartige Gestalt oder einen Abschnitt (40, 46) mit einer solchen Gestalt aufweist, wobei zwischen der ersten und der zweiten Elektrodenanordnung Spannungspulse mit einer zeitlichen Dauer von weniger als 1 µs und bei maximaler Spannungsamplitude Feldstärken von mindestens 100 kV/mm erzeugt werden.

15. Verfahren nach Anspruch 14 unter Verwendung einer Einrichtung nach einem der Ansprüche 1 bis 13.

## Claims

1. An apparatus (10) for recovering hydrogen from a hydrogen-containing medium, said apparatus comprising:
- a first and a second electrode arrangement (16, 18), between which is formed a space (20) through which a hydrogen-containing medium can be passed, and
- a voltage source (26) for generating a high voltage between the first and second electrode arrangements (16, 18) in order to generate an electric field in said space (20) which is suitable for separating hydrogen from molecules of the hydrogen-containing medium,
wherein the first and/or the second electrode arrangement (16, 18) comprises at least one electrode (22, 24, 38, 42) having a rounded, in particular spherical, shape or a portion of such a shape, wherein the voltage source (26) is adapted to generate voltage pulses with a time duration of less than 1µs, and the voltage source (26, 50), the radius of curvature of the electrode (22, 24) or of the portion of the electrode (40, 46) and the gap width are selected such that, at the maximum voltage amplitude, field strengths of at least 100 kV/mm are generated.

2. The apparatus (10) as claimed in claim 1, in which said rounded shape comprises one of the following shapes:
- a spherical or partially spherical shape,
- a shape with a cylindrical body (44) with rounded, especially hemispherical end surfaces, or
- a torus shape or a shape with constant field strength transitions according to a Rogowski profile.

3. The apparatus (10) as claimed in any of the preceding claims, in which the space (20) is narrowed in at least one location to a gap which is no more than 3 mm, preferably no more than 2 mm wide.

4. The apparatus (10) as claimed in any of the preceding claims, in which the voltage source (26, 50) is adapted to generate voltage pulses with a time duration of less than 500 ns and preferably between 10 and 300 ns, and/or
in which the voltage source (26, 50) is adapted to generate voltage pulses with an amplitude of at least 50 kV, preferably at least 100 kV, particularly preferably at least 500 kV and especially at least 1 MV, and/or
in which the voltage source (26, 50), the radius of curvature of the electrode (22, 24) or of the portion of the electrode (40, 46) and the gap width are selected such that, at the maximum voltage amplitude, field strengths of at least 500 kV/mm, preferably at least 1 MV/mm are generated.

5. The apparatus (10) as claimed in claim 4, in which the voltage source (26, 48, 50) is adapted to generate a DC voltage, which is modulated by said voltage pulses.

6. The apparatus (10) as claimed in any of the preceding claims, in which at least a part of the electrodes or of the electrode portions (22, 24, 36, 40, 42, 46) is coated with an insulating layer, and/or
in which the first and/or second electrode arrangement comprises a plurality of rounded electrodes or electrode portions, whose respective surfaces have different radii of curvature, the radius of curvature preferably increasing in at least some of the electrodes or electrode portions among the plurality of electrodes or electrode portions along the direction of flow of the hydrogen-containing medium in the space (20) and/or as their distance from the space (20) increases.

7. The apparatus (10) as claimed in any of the preceding claims, in which the at least one electrode (36, 42) comprises an electrode body (38, 44) with a rounded, especially spherical, shape, the surface of which has a first minimum radius of curvature, and on the surface of which are disposed a plurality of small, rounded electrodes (40, 46), the surface of which has a second minimum radius of curvature which is less than the first minimum radius of curvature.

8. The apparatus (10) as claimed in any of the preceding claims, in which an apparatus (52) is provided through which the hydrogen-containing medium can be guided before it enters the space (20) and which provides an electric or magnetic field (54) for aligning the hydrogen-containing molecules such that the H atom to be removed from the molecule is preferably located on the side of the molecule facing the negative electrode arrangement when it enters the electric field between the first and second electrode arrangements (16, 18).

9. The apparatus (10) as claimed in any of the preceding claims, in which an apparatus (56) is provided for heating the hydrogen-containing medium before it enters the space (20) and/or an apparatus (58) for adding a catalyst to the hydrogen-containing medium, and/or in which a controller is provided for controlling the supply of the hydrogen-containing medium to the space (20) depending on the current demand of a hydrogen user, which is coupled to the apparatus (10) to receive the hydrogen produced.

10. The apparatus (10) as claimed in any of the preceding claims, in which the first and second electrode arrangements (16, 18) each comprise at least one electrode (66, 68) which has a rounded, especially spherical, shape or a portion with such a shape,
and in which on one (66) of the two electrodes at least one elongate, especially rod or needle-shaped, portion (70) is formed, which extends from that electrode (66) towards the other electrode (68), wherein
the at least one elongate portion (70) preferably has a tip (72) at its distal end, and/or wherein
the length (a) of the at least one elongate portion (70) is preferably between 8 and 20 mm, and/or wherein
the distance (b) between the distal end of the at least one elongate portion (70) and the other electrode (68) is 2 to 20 mm.

11. The apparatus (10) as claimed in claim 10, in which the other (68) of the two electrodes has a diameter (c) of 10 to 30 mm and is preferably spherical or partially spherical, and/or
in which the one electrode (66) on which the at least one elongate portion is formed has a greater diameter than the other electrode (68).

12. The apparatus (10) as claimed in either of claims 10 or 11, in which there are arranged on the one electrode (66) a plurality of, especially 2 or 4, such elongate portions (70), which are preferably aligned parallel to one another, wherein
the distance (e) between adjacent elongate portions (70) is preferably 10 to 50 mm.

13. The apparatus (10) as claimed in claim 12, in which the plurality of elongate portions (70) are each arranged opposite respective different electrodes (68) of the other electrode arrangement and extend towards the latter.

14. A process for recovering hydrogen from a hydrogen-containing medium, comprising the following steps:
passing a hydrogen-containing medium through a space (20) between a first and a second electrode arrangement (16, 18),
applying a high voltage between the first and second electrode arrangements (16, 18) in order, in said space (20), to generate an electric field with which hydrogen is separated from molecules of the hydrogen-containing medium,
wherein the first and/or the second electrode arrangement (16, 18) comprises at least one electrode (22, 24, 36, 42) which has a rounded, especially spherical, shape or a portion (40, 46) with such a shape, wherein voltage pulses with a time duration of less than 1 µs and at maximum voltage amplitude field strengths of at least 100 kV/mm are generated between the first and second electrode arrangements.

15. The process as claimed in claim 14 using an apparatus as claimed in any of claims 1 to 13.

## Revendications

1. Dispositif (10) pour extraire de l'hydrogène à partir d'un fluide contenant de l'hydrogène, qui comprend ce qui suit :
- un premier et un deuxième arrangements d'électrodes (16, 18), entre lesquels un espace intermédiaire (20) est configuré, par lequel le fluide contenant de l'hydrogène peut passer, et
- une source de tension (26), pour produire une haute tension entre le premier et le deuxième arrangements d'électrodes (16, 18), pour produire dans ledit espace intermédiaire (20) un champ électrique, apte à séparer l'hydrogène de molécules du fluide contenant de l'hydrogène,
dans lequel le premier et/ou le deuxième arrangements d'électrodes (16, 18) comprennent au moins une électrode (22, 24, 38, 42), qui présente une forme arrondie, en particulier sphérique, ou un segment ayant une telle forme, la source de tension (26) étant conçue pour produire une impulsion de tension ayant une durée temporelle inférieure à 1 µs, et la source de tension (26, 50), le rayon de courbure de l'électrode (22, 24) ou du segment d'électrode (40, 46), et la largeur d'interstice, étant choisis de façon à produire, en présence d'une amplitude de tension maximale, des intensités de champ d'au moins 100 kV/mm.

2. Dispositif (10) selon la revendication 1, dans lequel la forme arrondie mentionnée comprend l'une des formes suivantes :
- une forme sphérique ou partiellement sphérique,
- une forme comportant un corps cylindrique (44) ayant des surfaces en bout arrondies, en particulier semi-sphériques, ou
- une forme torique ou une forme présentant des transitions continues de l'intensité du champ, selon un profil de Rogowski.

3. Dispositif (10) selon l'une des revendications précédentes, dans lequel l'espace intermédiaire (20) est, au moins en un point, rétréci pour former un interstice, qui a une largeur d'au plus 3 mm, de préférence d'au plus 2 mm.

4. Dispositif (10) selon l'une des revendications précédentes, dans lequel la source de tension (26, 50) est conçue pour produire des impulsions de tension ayant une durée temporelle inférieure à 500 ns et de préférence comprise entre 10 et 300 ns, et/ou
dans lequel la source de tension (26, 50) est conçue de façon à produire des impulsions de tension ayant une amplitude d'au moins 50 kV, de préférence d'au moins 100 kV, d'une manière particulièrement préférée d'au moins 500 kV et en particulier d'au moins 1 MV, et/ou
dans lequel la source de tension (26, 50), le rayon de courbure de l'électrode (22, 24) ou du segment d'électrode (40, 46), et la largeur de l'interstice, sont choisis de façon à produire, en présence d'une amplitude de tension maximale, des intensités de champ d'au moins 500 kV/mm, de préférence d'au moins 1 MV/mm.

5. Dispositif (10) selon la revendication 4, dans lequel la source de tension (26, 48, 50) est conçue pour produire une tension continue, qui est modulée par les impulsions de tension mentionnées.

6. Dispositif (10) selon l'une des revendications précédentes, dans lequel au moins une partie des électrodes ou des segments d'électrodes (22, 24, 36, 40, 42, 46) est revêtue d'une couche isolante, et/ou
dans lequel le premier et/ou le deuxième arrangements d'électrodes comprennent un grand nombre d'électrodes ou de segments d'électrodes arrondis, les surfaces de chacun d'eux présentant des rayons de courbure différents, les rayons de courbure augmentant de préférence, pour au moins une partie des électrodes ou des segments d'électrodes, appartenant au grand nombre d'électrodes ou de segments d'électrodes, le long de la direction d'écoulement du fluide contenant de l'hydrogène dans l'espace intermédiaire (20) et/ou quand augmente la distance à l'espace intermédiaire (20).

7. Dispositif (10) selon l'une des revendications précédentes, dans lequel la ou les électrodes (36, 42) comprennent chacune un corps d'électrode (38, 44) ayant une forme arrondie, en particulier sphérique, dont la surface présente un premier rayon de courbure minimal, et sur la surface duquel sont disposées un grand nombre d'électrodes arrondies plus petites (40, 46), dont la surface présente un deuxième rayon de courbure minimal, qui est plus petit que le premier rayon de courbure minimal.

8. Dispositif (10) selon l'une des revendications précédentes, dans lequel un dispositif (52) est prévu, par lequel le fluide contenant de l'hydrogène peut passer avant de pénétrer dans l'espace intermédiaire (20), et qui fournit un champ électrique ou magnétique (54) pour orienter les molécules contenant de l'hydrogène, de telle sorte que l'atome d'hydrogène de la molécule, qu'il s'agit de séparer, se trouve, lors de l'entrée dans le champ électrique, entre le premier et le deuxième arrangements d'électrodes (16, 18), de préférence sur le côté de la molécule dirigé vers l'arrangement d'électrodes négatives.

9. Dispositif (10) selon l'une des revendications précédentes, dans lequel sont prévus un dispositif (56) pour chauffer le fluide contenant de l'hydrogène avant sa pénétration dans l'espace intermédiaire (20), et/ou un dispositif (58) pour introduire un catalyseur dans le fluide contenant de l'hydrogène, et/ou
dans lequel une commande, pour piloter l'amenée du fluide contenant de l'hydrogène dans l'espace intermédiaire (20) est prévue en fonction du besoin effectif en hydrogène d'un récepteur, qui est couplé au dispositif (10) destiné à recevoir l'hydrogène produit.

10. Dispositif (10) selon l'une des revendications précédentes, dans lequel le premier et le deuxième arrangements d'électrodes (16, 18) comprennent chacun une électrode (66, 68), qui a une forme arrondie, en particulier sphérique, ou un segment ayant une telle forme,
et dans lequel, contre l'une (66) des deux électrodes, au moins un segment (70) allongé, en particulier en forme de bâtonnet ou d'aiguille, est réalisé, qui s'étend à partir de cette électrode (66) dans la direction allant vers l'autre électrode (68),
le ou les segments allongés (70) présentant de préférence une pointe (72) en leur extrémité distale, et/ou
la longueur (a) du ou des segments allongés (70) étant de préférence comprise entre 8 et 20 mm, et/ou
la distance (b) entre l'extrémité distale du ou des segments allongés (70) et de l'autre électrode (68) étant de 2 à 20 mm.

11. Dispositif (10) selon la revendication 10, dans lequel l'autre (68) des deux électrodes a un diamètre (c) de 10 à 30 mm, et a de préférence une forme sphérique ou partiellement sphérique, et/ou
dans lequel l'électrode (66) contre laquelle sont réalisés le ou les segments allongés présente un diamètre plus grand que l'autre électrode (68).

12. Dispositif (10) selon l'une des revendication 10 ou 11, dans lequel, contre l'électrode (66), plusieurs, en particulier 2 ou 4 segments allongés (70) de ce type sont disposés, qui de préférence sont orientés parallèlement les uns aux autres,
la distance (e) entre des segments allongés voisins (70) étant de préférence de 10 à 50 mm.

13. Dispositif (10) selon la revendication 12, dans lequel les plusieurs segments allongés (70) sont chacun disposés chacun en un point opposé à différentes électrodes (68) de l'autre arrangement d'électrodes, et s'étendent dans la direction de ces dernières.

14. Procédé pour l'extraction d'hydrogène à partir d'un fluide contenant de l'hydrogène, comportant les étapes suivantes :
passage d'un fluide contenant de l'hydrogène par un espace intermédiaire (20) entre un premier et un deuxième arrangements d'électrodes (16, 18), application d'une haute tension entre le premier et le deuxième arrangements d'électrodes (16, 18), pour produire dans ledit espace intermédiaire (20) un champ électrique, à l'aide duquel de l'hydrogène est séparé de molécules du milieu contenant de l'hydrogène,
le premier et/ou le deuxième arrangements d'électrodes (16, 18) comprenant au moins une électrode (22, 24, 36, 42), qui présente une forme arrondie, en particulier sphérique, ou un segment (40, 46) ayant une telle forme, des impulsions de tension ayant une durée temporelle inférieure à 1 µs et, en présence d'une amplitude de tension maximale, des intensités de champ d'au moins 100 kV/mm, étant produites entre le premier et le deuxième arrangements d'électrodes

15. Procédé selon la revendication 14, par utilisation d'un dispositif selon l'une des revendications 1 à 13.
